# EUROPÄISCHE PATENTSCHRIFT

(11) **EP 1 447 835 B1**
(45) Veröffentlichungstag und Bekanntmachung des Hinweises auf die Patenterteilung: **03.04.2013**
(21) Anmeldenummer: 04002699.9
(22) Anmeldetag: 06.02.2004
(51) Int. Cl.: H01J 61/54, H01J 5/54, H01J 61/70, H01J 61/32

(54) **Niederdruckentladungslampe**
Low pressure discharge lamp
Lampe à décharge basse pression

(30) Priorität: 17.02.2003 DE 10306584
(43) Veröffentlichungstag der Anmeldung: 18.08.2004
(60) Teilanmeldung: 12180308.4
(73) Patentinhaber: OSRAM GmbH, 81543 München (DE)
(72) Erfinder: Hilscher, Achim, 86316 Friedberg-Stätzling (DE); Noll, Thomas, 85110 Kipfenberg (DE)

(56) Entgegenhaltungen:
- EP-A1- 0 918 352
- WO-A1-01/87019
- DE-A1- 3 304 857
- DE-A1- 3 642 413
- DE-U1- 8 337 107
- JP-A- 7 320 695
- US-A- 6 051 930

## Beschreibung

### Technisches Gebiet

Die vorliegende Erfindung betrifft eine Niederdruckentladungslampe gemäß dem Oberbegriff von Anspruch 1.

### Stand der Technik

Bekannt ist eine Niederdruckentladungslampe mit einem Sockelgehäuse, einem Entladungsgefäß, dessen Endabschnitte am Sockelgehäuse befestigt sind und das zumindest zwei U-förmige Teilelemente und einen Ansetzsteg hat, oder einem Entladungsgefäß, dessen Endabschnitte am Sockelgehäuse befestigt sind und das zumindest drei U-förmige Teilelemente und zwei Ansetzstege hat, wobei der Ansetzsteg/die Ansetzstege zur Verbindung von einem Endabschnitt eines der U-förmigen Teilelemente mit einem Endabschnitt des nächsten der U-förmigen Teilelemente in einer solchen Weise, dass ein zusammenhängender Entladungsweg in den Teilelementen gebildet wird, vorgesehen ist/sind.

Derartige Niederdruckentladungslampen werden im Unternehmen OSRAM beispielsweise unter den Bezeichnungen DULUX D/E, T/E, T/E IN gefertigt. Genauer gesagt handelt es sich bei den vorstehend angesprochenen Lampen um kompakte Niederdruckentladungslampen mit einem Entladungsgefäß aus mindestens vier geraden, parallel verlaufenden Rohren, die in einem Vieleck angeordnet und durch Querverbindungen an oder nahe den Endabschnitten der geraden Rohre zu einem einfach zusammenhängenden und gasdichten Entladungsweg verbunden sind.

In Abhängigkeit von der Länge und dem Durchmesser des Entladungsgefäßes und vom Durchmesser der Querverbindungen der Entladungsrohre werden oft sehr hohe Spannungen benötigt, um ein Zünden der Niederdruckentladungslampe sicherzustellen.

Aus der Patentschrift EP 1 217 645 ist eine Niederdruckentladungslampe bekannt, bei der im Zentrum des von den geraden Rohren des Entladungsgefäßes gebildeten zylindrischen Hohlraums eine parallel zu den geraden Rohren verlaufende Schraubenfeder aus Metall angeordnet ist, um die Zündspannung zu erniedrigen und gleichzeitig das Licht, das nach innen in den von den geraden Rohren und den Querverbindungen des Entladungsgefäßes gebildeten Hohlraum abgestrahlt wird, mit geringer Behinderung passieren zu lassen.

Aus der US-Patentschrift 6 064 152 ist bekannt, in den von den geraden, parallel verlaufenden Rohren des Entladungsgefäßes gebildeten Innenraum einen Hohlzylinder aus elektrisch leitendem Material in Form einer Metallfolie einzubringen, wodurch die Zündspannung erheblich verringert werden kann.

Der Nachteil bei dem genannten Stand der Technik besteht darin, dass die Schraubenfeder aus der EP 1 217 645 und der metallische Zylinder aus dem US-Patent von außen sichtbar sind und den Lichtstrom behindern.

Aus der WO 01/87019 ist eine Leuchtstofflampe bekannt, bei der eine Zündhilfe einerseits mit dem Sockel verbunden ist und sich andrerseits in Form einer Feder mit einem Schenkel des Entladungsgefäßes ohne Elektrode in Anlage befindet.

Die US 6,051,930 offenbart eine kompakte Leuchtstofflampe nach dem Oberbegriff von Anspruch 1; mit einem Zündhilfsdraht, dessen eines Ende an eine Lampenelektrode angeschlossen ist und dessen anderes Ende an einem Giasrohr des Lampengefäßes fixiert ist.

Die DE 36 42 413 A1 offenbart eine kompakte Leuchtstofflampe mit einer Zündhilfe. Es wird vorgeschlagen, entweder am Entladungsgefäß einen elektrisch leitfähigen Flächenbereich aufzubringen oder diesen nachträglich darauf anzubringen, wie beispielsweise einen aus Draht gefertigten Schnappbügel.

Die DE 83 37107 U1 offenbart eine Niederdruckentladungslampe mit einem Sockel, dessen Sockel hülse aus Isoliermaterial besteht und darin eingebettete Sockelkontakte besitzt, wobei die Wand der Sockelhülse auf ihrer Innenseite zwecks besserem Zündverhalten mit einer elektrisch leitenden Schicht versehen ist.

Die JP 07-320695 offenbart eine kompakte Leuchtstofflampe mit Doppelrohrstruktur und einem geschlossenen elektrischen Leiter, der zwecks Reduktion der Zündspannung in der Mitte des Entladungsgefäßes platziert und mit einer äußeren Stromzuführung oder einem Kontaktstift verbunden ist.

Die EP 0 918 352 A1 offenbart eine kompakte Leuchtstofflampe mit einer Vielzahl von U-förmigen Glasrohren, die das Entladungsgefäß bilden und einen Innendurchmesser im Bereich von 6 mm bis 9 mm besitzen.

### Darstellung der Erfindung

Die Aufgabe der vorliegenden Erfindung besteht darin, die Nachteile vom Stand der Technik zu beseitigen und eine Lampe mit verringerter Zündspannung vorzusehen, bei der der Lampenlichtstrom aus dem Entladungsgefäß nicht beeinflusst wird. Ferner soll die erfindungsgemäße Lampe mit geringem Aufwand montierbar sein.

Diese Aufgabe wird durch eine Niederdruckentladungslampe mit den Merkmalen des Anspruchs 1 gelöst. Durch diese Maßnahme lässt sich die Zündspannung der Lampe verringern, vorzugsweise, wenn diese an hochfrequenter Wechselspannung (≥ 20 kHz), wie beispielsweise von einem elektronischen Vorschaltgerät bereitgestellt, betrieben wird.

Der Drahtring ist mit der Elektrodenhalterung (einem der vier Stromzuführungsdrähte bzw. einem der mit der Lampenfassung in Verbindung stehenden Kontaktstifte) elektrisch leitend verbunden, sowie zur Vereinfachung der Montage entweder an Innenumfang des Sockelgehäuses oder an Innenumfang der das Entladungsgefäß bildenden Glasrohre angeordnet. Die Zündspannungserniedrigung wird dabei im allgemeinen um so höher, je näher der Draht am Entladungsgefäß anliegt, wobei hierbei die Enden der das Entladungsgefäß bindenden Glasrohre gemeint sind, die zur Befestigung in das Sockelgehäuse hineinragen.

Einen stärkeren Effekt auf die Erniedrigung der Zündspannung als der "seitliche" Abstand des Drahtes zu den Glasrohren hat der Abstand zwischen der Ebene, die durch die Elektrodenwendeln gebildet wird und der Ebene, die durch den Drahtring gebildet wird. Dabei ist jeweils die Ebene senkrecht zur Lampenlängsachse gemeint. Je geringer dieser Abstand ist, desto größer ist die erreichte Zündspannungserniedrigung.

Das Endadungsgefäß hat zwei, vorzugsweise drei U-förmige Teilelemente, deren Endabschnitte mit einem bzw. zwei Ansetzstegen zu einem zusammenhängenden Entladungsweg verbunden sind. Der Querschnitt dieser Ansetzstege ist Im Hinblick auf den Rohrdurchmesser des Entladungsgefäßes optimiert, so dass eine minimale Zündspannung zum Zünden der Lampe erforderlich ist. Durch diese zur Ausbildung des leitfähigen Abschnitts zusätzliche Maßnahme wird nicht nur die Zündspannung gesenkt, sondern auch der Lichtstromanlauf beschleunigt und die Temperatur am Sockelgehäuse verringert.

Durch die Annäherung der beiden Enden der Lampe lässt sich die Zündspannung ebenfalls absenken.

Die vorliegende Erfindung ist auf rohrförmige Entladungsgefäße bei Niederdruckentladungslampen, insbesondere Kompaktleuchtstofflampen, anwendbar, vorzugsweise auf aus zwei oder drei U-förmigen Teilelementen bestehende Entladungsgefäße, insbesondere wenn sie an Vorschaltgeräten mit einer Frequenz ≥ 20 kHz betrieben werden.

### Kurze Beschreibung der Zeichnungen

Nachfolgend werden bevorzugte Ausführungsbeispiele der Erfindung an Hand schematischer Zeichnungen erläutert. Es zeigen:
- Fig. 1: einen schematischen Teilschnitt einer erfindungsgemäßen Niederdruckentladungslampe entsprechend dem ersten Ausführungsbeispiel,
- Fig. 2: einen schematischen Teilschnitt einer erfindungsgemäßen Niederdruckentladungslampe entsprechend dem zweiten Ausführungsbeispiel,
- Fig. 3A und 3B: eine schematische Darstellung einer weiteren Maßnahme zur Verringerung der Zündspannung, und
- Fig. 4: eine Veranschaulichung der Struktur der Entladungsgefäße.

### Bevorzugte Ausführungen der Erfindung

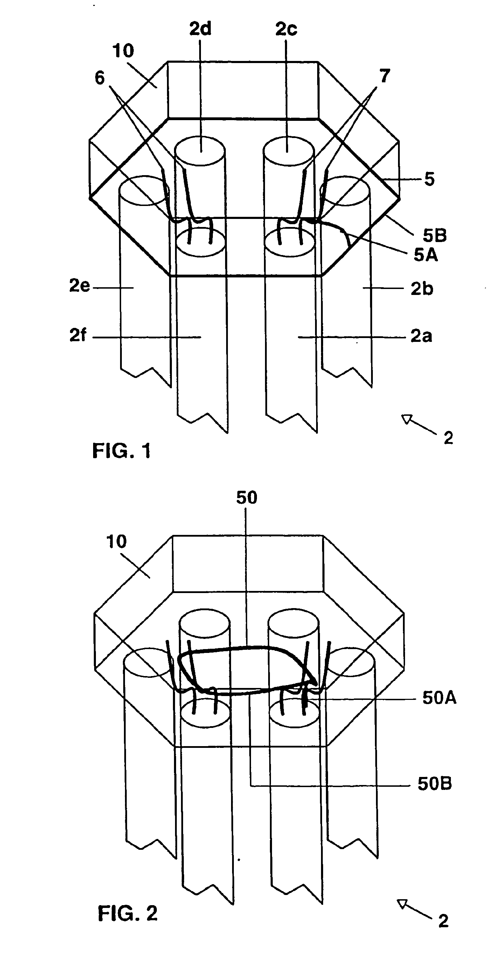

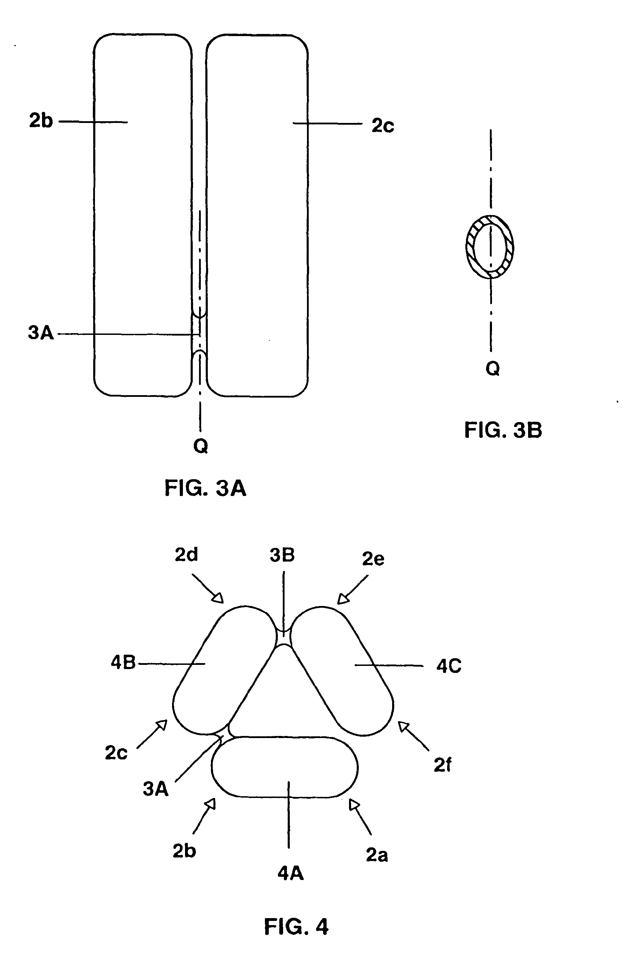

Fig. 1 zeigt schematisch einen Teilschnitt einer erfindungsgemäßen Niederdruckentladungslampe in Perspektivansicht, während Fig. 4 die Untersicht der Niederdruckentladungslampe bezüglich der Darstellung in Fig. 1 zeigt.

Diese gezeigte Art von Niederdruckentladungslampen weist ein Entladungsgefäß 2 aus Glas auf, das sechs in ihren Längsrichtungen zueinander parallel angeordnete Rohre 2a - 2f hat und das an einem Endabschnitt eines Sockelgehäuses 10 vorgesehen ist (siehe Fig. 1). Die Rohre 2a - 2f bilden gemeinsam mit Querverbindungen 4A, 4B, 4C und Ansatzstegen 3A, 3B (siehe Fig. 3, 4) einen zusammenhängenden Entladungsweg. Die Innenwand des Entladungsgefäßes 2 ist mit einer Leuchtstoffbeschichtung versehen.

Jeweils zwei der Rohre 2a - 2f, genauer gesagt die Rohre 2a und 2b, die Rohre 2c und 2d sowie die Rohre 2e und 2f, sind durch jeweils eine der in Fig. 4 gezeigten Querverbindung 4A, 4B, 4C miteinander verbunden. Die Querverbindungen 4A, 4B, 4C befindet sich an den Endabschnitten der Rohre 2a - 2f, die entgegengesetzt zu dem Endabschnitt der Rohre im Sockelgehäuse vorgesehen sind. Die Rohre 2b und 2c sowie 2d und 2e sind an den Endabschnitten im Sockelgehäuse 10 durch die Ansetzstege 3A und 3B (siehe Fig. 4) verbunden. Jeweils zwei nebeneinander angeordnete Rohre, d.h. die Rohre 2b und 2c, 2d und 2e sowie 2a und 2f bilden die Ecken eines vorzugsweise gleichseitigen Dreiecks.

Die freien Enden der Rohre 2a bis 2f, die zu den Querverbindungen 4A und 4C entgegengesetzt liegen, sind gasdicht abgedichtet und werden durch das Sockelgehäuse 10 gehalten. In die beiden Enden der Rohrabschnitte 2a und 2f des Entladungsgefäßes sind Elektrodenhalterungen 6, 7 eingeschmolzen.

Das Sockelgehäuse 10 weist an seinem zum Entladungsgefäß 2 entgegengesetzten Endabschnitt ein nicht dargestelltes Kontaktierungssystem auf, das den Kontakt von den Elektrodenhalterungen 6, 7 nach außen hin herstellt und vorzugsweise als Stiftsockel ausgebildet ist.

Entsprechend dem in Fig. 1 dargestellten ersten Ausführungsbeispiel ist ein elektrisch leitfähiger Draht 5 am Innenumfang des Sockelgehäuses 10 benachbart zum Sockelkitt oder in diesen eingebracht. Der Draht ist dabei in einer solchen Weise angeordnet, dass sich im wesentlichen ein elektrischer Schluss um das Entladungsgefäß 2 bildet. Dabei hat der Draht 5 einen Verbindungsabschnitt 5A, über den dieser mit einer der Elektrodenhalterung 6, 7 elektrisch verbunden ist, und der mit dem entgegengesetzten Endabschnitt 5B des Drahtes in Berührung steht. Die Erfindung ist jedoch nicht darauf beschränkt, sondern der Verbindungsabschnitt 5A und der Endabschnitt 5B können alternativ dazu voneinander beabstandet sein, wobei die erfindungsgemäße Wirkung ebenfalls zu verzeichnen ist.

Das zweite Ausführungsbeispiel entsprechend der vorliegenden Erfindung ist in Fig. 2 dargestellt und weist im Unterschied zum Draht 5 vom ersten Ausführungsbeispiel einen Draht 50 auf, der am Innenumfang der Rohre des Entladungsgefäßes 2 vorgesehen ist. Der Draht 50 hat einen an einer Elektrodenhalterung anliegenden Verbindungsabschnitt 50A und einen Endabschnitt 50B, der mit dem Verbindungsabschnitt 50A in Berührung befindet.

Durch die Drahtringe 5 und 50 entsprechend dem ersten und zweiten Ausführungsbeispiel wird die Zündspannung der Niederdruckentladungslampe abgesenkt, ohne dass die Zündhilfe, wie es beim Stand der Technik aus dem US-Patent 6.064.152 der Fall war, von außen sichtbar ist und den Lampenlichtstrom beeinflusst.

Da lediglich ein Abschnitt des Drahtes 5 bzw. 50 mit einer Elektrodenhalterung zu verbinden ist, lässt sich die Bestückung gegenüber sockelintegrierten Zündhilfen nach dem Stand der Technik wesentlich vereinfachen.

Beispielsweise konnte bei einer Niederdruckentladungslampe OSRAM DULUX T/E 32W und einem Draht 5 entsprechend dem ersten Ausführungsbeispiel eine Absenkung der Zündspannung von 640 V, im Fall ohne Draht 5 am Innenumfang des Sockelgehäuses 10, auf 550 V verzeichnet werden.

Bei Messungen mit einer quecksilberfreien Niederdruckentladungslampe OSRAM DULUX T/E 42 W wurde festgestellt, dass der Draht 50 an der Innenseite der Entladungsrohre im Vergleich zum Draht 5 in der Innenkante des Sockelgehäuses 10 einen ungefähr doppelt so großen Effekt auf die Erniedrigung der Zündspannung hat. Eine Ursache für diese Wirkung wird vom Erfinder darin gesehen, dass ein geringerer Abstand zwischen Entladungskanal und dem Draht 50 (Innenring) eine Verringerung der Zündspannung begünstigt.

Die vorliegende Erfindung ist nicht auf einen Einsatz bei Lampen mit 6 Rohren beschränkt, sondern kann unter anderem auch bei Niederdruckentladungslampen mit 4 Rohren, wie beispielsweise bei der Niederdruckentladungslampe OSRAM DULUX D/E angewendet, oder auch solchen mit 8 oder mit mehr Rohren der Anzahl n, angewendet werden. Im Unterschiede zu den in den Fig. 1 und 2 dargestellten Ausführungsformen sind n/2 Querverbindungen und (n/2)-1 Ansetzstege vorgesehen. Die Drähte 5 bzw. 50 werden in gleicher Weise außerhalb der Rohre des Entladungsgefäßes oder innerhalb von diesen vorgesehen.

Auch ist es bei der Erfindung nicht notwendig, dass lediglich an den Endabschnitten des Entladungsgefäßes eine Stromzuführung erfolgt. In gleicher Weise ist die vorliegende Erfindung auch auf Niederdruckentladungslampen mit zusätzlichen Elektrodenhalterungen anwendbar.

Gegenüber Lösungen nach dem Stand der Technik zur Zündspannungserniedrigung werden durch die vorliegende Erfindung die elektrischen Parameter der Lampe nicht verändert.

Die vorliegende Erfindung ist auch dann zur Zündspannungserniedrigung erfolgreich anwendbar, wenn weitere Stromzuführungen, beispielsweise zum Aufheizen eines Amalgams, an der Lampe bereits angebracht sind.

Die Fig. 3A und 3B dienen zur Veranschaulichung einer weiteren Maßnahme zur Zündspannungsverringerung, die nicht zur vorliegenden Erfindung gehört und z.B. bereits aus EP 0 918 352 A (Fig. 14-17, [0127-0153] bekannt ist.

In Fig. 3A sind die Rohre 2b und 2c und ihre fußseitige Verbindung mit dem Ansetzsteg 3A schematisch dargestellt. In gleicher Weise sind auch die Rohre 2d und 2e über den Ansetzsteg 3B und die entsprechenden Rohre bei Niederdruckentladungslampen mit n Rohren verbunden. Fig. 3B zeigt eine vergrößerte Ansicht vom Querschnitt des Ansetzsteges 3A in der Schnittebene Q in Fig. 3A.

Eine Vergrößerung des Querschnitts der Ansetzstege 3A führt zu einer Verringerung der zur Lampenzündung benötigten Spannung. So konnte beispielsweise bei einer Erhöhung des Stegquerschnitts von 9 bis 10 mm² auf ungefähr 24 mm² eine Zündspannungserniedrigung von ungefähr 20 V pro Ansetzsteg festgestellt werden.

Dabei konnte auch eine Beschleunigung des Lichtanlaufstroms beobachtet werden. Dieser Effekt kann darauf zurück gefüllt werden, dass sich der Quecksüberdampf nach dem Lampenstart bei größeren Querschnittsflächen der Ansetzstege schneller in der Lampe verteilen kann. Andrerseits wird der Lichtstrom selbst vom Ansetzstegquerschnitt nicht beeinflusst.

Die Temperatur am Sockelgehäuse ist aufgrund der geringeren Wandverluste im Bereich vergrößerter Ansetzstege 3A, 3B ungefähr 5°C niedriger als bei Standardlampen.

Der große Stegdurchmesser kann beispielsweise durch das Blasen in einer Blasform realisiert werden. Große Wandstärken der Entladungsgefäße kön nen dabei zu Verarbeitungsproblemen führen, da zur Erzeugung der Stegöffnung eine relativ große Glasmenge entfernt werden muss. Dieses Glasmaterial bildet eine Wulst um den Ansetzsteg, was dazu führt, dass der Abstand der Rohre 2b und 2c sowie 2d und 2e vergrößert werden muss. Das kann dazu führen, dass die Endabschnitte der Rohre 2a und 2f, in denen die Elektroden untergebracht sind, wodurch diese Rohre die Enden der Entladungsstrecke bilden, einen gegenüber Lampen ohne vergrößertem Querschnitt der Ansetzstege verringerten Abstand aufweisen. Der Abstand der Enden dieser Rohre 2a und 2f beeinflusst jedoch ebenfalls die Zündspannung der Lampe, so dass dieser bei einer Verringerung der Zündspannung durch eine Vergrößerung des Querschnitts des Ansetzsteges zu berücksichtigen ist

Vorteilhafte Werte für den Stegquerschnitt, wie dieser in Fig. 3B gezeigt ist, liegen im Bereich von 19 bis 29 mm², vorzugsweise im Bereich von 22 bis 25 mm². Durch diese Aufweitung des Querschnitts an den Ansetzstegen verringert sich die notwendige Spannung, um die anfängliche Ladungswelle entlang der Innenseite der Entladungsrohre von einer Elektrode zur anderen zu transportieren, da jede Engstelle entlang der Innenseite der Rohre ein Hindernis für diese Ladungswelle darstellt. Zusätzlich kann sich der Abstand der Enden der Rohre 2a und 2f von den standardmäßigen 2,3 mm auf 1,8 bis 0,7 mm verringern. Es wird davon ausgegangen, dass bei geringerem Abstand zwischen den Elektroden, die in den Enden der Rohre 2a und 2f angeordnet sind, die Elektronenlawine von den Elektroden zur Kolbenwand leichter ausgelöst wird. Dies kann die erforderliche Zündspannung weiter absenken.

So können in einer erfindungsgemäßen Niederdruckentladungslampe zusätzlich zu den Einrichtungen zur Verringerung der Zündspannung des ersten und zweiten Ausführungsbeispiels, das heißt, dem Drahtringen 5 oder 50 größere Querschnitte der Ansetzstege vorgesehen werden.

Bei diesen Kombinationen kann der Draht eine Ablenkung der Zündspannung um ungefähr 100 V bewirken, während die Stegerweiterung eine Verringerung der Zündspannung um etwa 40 V zum Ergebnis hat.

### Bezugszeichenliste

- 2: Entladungsgefäß
- 2a - 2f: Rohre
- 3A, 3B: Ansetzstege
- 4A - 4C: Querverbindungen
- 5: Draht
- 5A: Verbindungsabschnitt
- 5B: Endabschnitt
- 6, 7: Elektrodenhalterungen
- 10: Sockelgehäuse
- 50: Draht
- 50A: Verbindungsabschnitt
- 50B: Endabschnitt

## Patentansprüche

1. Niederdruckentladungslampe mit einem Sockelgehäuse (10), einem gewundenen rohrförmigen Entladungsgefäß (2), dessen Endabschnitte an einem Endabschnitt des Sockelgehäuses (10) befestigt sind, und einem Kontaktierungssystem zur elektrischen Kontaktierung der Lampe, das sich an dem vom Entladungsgefäß (2) abgewandten Endabschnitt des Sockelgehäuses (10) befindet und den Kontakt von innerhalb des Sockelgehäuses (10) angeordneten Elektrodenhalterungen (6, 7) nach außen herstellt, wobei das rohrförmige Entladungsgefäß (2) aus mindestens vier geraden, parallel verlaufenden Rohren (2a, 2b, 2c, 2d, 2e, 2f) besteht, die in einem Vieleck angeordnet sind und durch Querverbindungen (4A, 4B, 4C) und zumindest einen Ansetzsteg (3A, 3B) zu einem zusammenhängenden Enttadungsweg verbunden sind, mit einem leitfähigen, einem Draht aufweisenden Abschnitt (5, 50), der mit dem Kontaktierungssystem in elektrischer Verbindung steht und benachbart zum Entladungsgefäß (2) im Sockelgehäuse (10) in einer solchen Weise angeordnet ist, dass ein elektrischer Schluss um zumindest einen Teil des Entladungsgefäßes (2) gebildet wird,
**dadurch gekennzeichnet, dass** der leitfähige Abschnitt (5; 50) als Drahtring ausgebildet ist, der mit einer der Elektrodenhalterungen (6, 7) electrical Leitend verbunden ist und der innerhalb des Sockelgehäuses (10) entweder am Innenumfang des Sockelgehäuses (10) oder am Innenumfang der das Entladungsgefäß (2) bildenden, mindestens vier parallel verlaufenden Rohre (2a, 2b, 2c, 2d, 2e, 2f) angeordnet ist.

## Claims

1. Low-pressure discharge lamp having a base housing (10), a wound, tubular discharge vessel (2), whose end sections are fastened to an end section of the base housing (10), and a contact-making system for making electrical contact with the lamp, which contact-making system is located on that end section of the base housing (10) which is remote from the discharge vessel (2) and produces the contact between electrode holders (6, 7) arranged within the base housing (10) externally, the tubular discharge vessel (2) consisting of at least four straight, parallel tubes (2a, 2b, 2c, 2d, 2e, 2f), which are arranged in a polygon and are connected by cross-connections (4A, 4B, 4C) and at least one attachment web (3A, 3B) to form a cohesive discharge path, with a conductive section (5, 50), which has a wire, is electrically connected to the contact-making system and is arranged adjacent to the discharge vessel (2) in the base housing (10) in such a way that an electrical short circuit is formed around at least part of the discharge vessel (2), **characterized in that** the conductive section (5; 50) is in the form of a wire ring, which is electrically conductively connected to one of the electrode holders (6, 7) and which is arranged within the base housing (10) either on the inner circumference of the base housing (10) or on the inner circumference of the at least four parallel tubes (2a, 2b, 2c, 2d, 2e, 2f) forming the discharge vessel (2).

## Revendications

1. Lampe à décharge basse pression avec un boîtier de culot (10), une enceinte de décharge tubulaire (2) en spirale dont les parties d'extrémité sont fixées à une partie d'extrémité du boîtier de culot (10), et un système de mise en contact électrique de la lampe, qui se trouve sur la partie d'extrémité opposée à l'enceinte de décharge (2) du boîtier de culot (10) et qui établit le contact vers l'extérieur de supports d'électrodes (6, 7) disposés à l'intérieur du boîtier de culot (10), l'enceinte de décharge tubulaire (2) étant constituée d'au moins quatre tubes droits parallèles (2a, 2b, 2c, 2d, 2e, 2f), qui sont disposés en polygone et sont reliés par des traverses (4A, 4B, 4C) et au moins une entretoise d'attache (3A, 3B) de manière à former un chemin cohérent de décharge, comprenant une partie conductrice (5, 50) avec un fil, qui est reliée électriquement au système de mise en contact et est adjacente à l'enceinte de décharge (2) dans le boîtier de culot (10) de manière à former un circuit électrique autour d'une partie au moins de l'enceinte de décharge (2),
**caractérisée en ce que** la partie conductrice (5 ; 50) est réalisé sous la forme d'un anneau en fil, qui est relié de manière électroconductrice à l'un des supports d'électrodes (6, 7) et qui est disposé à l'intérieur du boîtier de culot (10), soit sur le pourtour intérieur du boitier de culot (10), soit sur le pourtour intérieur des au moins quatre tubes parallèles (2a, 2b, 2c, 2d, 2e, 2f) formant l'enceinte de décharge (2).
